# EUROPEAN PATENT SPECIFICATION

(11) **EP 3 597 477 B1**
(45) Date of publication and mention of the grant of the patent: **13.01.2021**
(21) Application number: 18183700.6
(22) Date of filing: 16.07.2018
(51) Int. Cl.: B60N 2/90

(54) **VEHICLE SEAT MASSAGE SYSTEM**
FAHRZEUGSITZMASSAGESYSTEM
SYSTÈME DE MASSAGE POUR SIÈGE DE VÉHICULE

(43) Date of publication of application: 22.01.2020
(73) Proprietor: KA Group AG, 8004 Zurich (CH)
(72) Inventor: Kasperczyk, Grzegorz, 01-164 Warszawa (PL); Zabielski, Pawel, 02-672 Warszawa (PL); Galazka, Kazimierz, 99-335 Witonia (PL); Lanko, Mateusz, 37-565 Rozwiernica (PL)
(74) Representative: Uexküll & Stolberg

(56) References cited:
- WO-A1-2015/039701
- US-A- 5 558 398

## Description

The present invention is directed to a pneumatic massage device for a vehicle seat comprising:
an array of distributed inflatable air cells equipped with an air conduit structure which is connectable to receive pressurized air for inflation and to vent off air from the air cell array for deflation, and which has for each air cell a flow connection for air flow to and from the air cell;
a valve arrangement for controlling flow into and out of the air cell array by selectively establishing inflation and deflation states, wherein the valve arrangement is configured to permit, in the inflation state, pressurized air flow to the air cell array, and to permit, in the deflation state, air to flow from the air cells out of the conduit structure for venting off; and
a plurality of flow resistors arranged in the array of air cells such that the flow resistance to the air cells is increasing along the air cell array, and such that expansion of air cells due to inflation is propagating through the array and reaching at last a pneumatic end region of the array with a time delay.

Drivers and passengers of motor vehicles, especially when driving long distances, often experience discomforts caused by long time static posture when seated in a vehicle seat. This may not only be felt as being uncomfortable but can also cause back pain, and in the long term even lead to permanent impairment of health, in particular for professional drives such as truck and bus drivers. To provide a remedy the automotive industry since some time offers vehicle seats with integrated pneumatic massage systems in the seat body, in particular in the seat back below the seat cover.

Such a massage system for a vehicle seat typically utilizes a pneumatic massage device as described above, a pump as a source for pressurized air and a controller to selectively control the valve arrangement to carry out inflation and deflation cycles.

An early example of such massage system is disclosed in US 5 135 282 B1. In this massage system a series of inflatable air cells is disposed along the seat back under the seat back cover. An air conduit structure is receiving pressurized air from the pump and is supplying this pressurized air to the air cells for sequentially inflating/deflating the series of air cells. For this purpose a common supply line interconnects the air cells in series, and a venting line interconnects the air cells in series. In order to produce a propagating sequential inflation along said series of air cells starting from the first cell and continuing cell by cell to the last cell at the end of the series, a number of electrically controllable valves (e.g. solenoid valves) and a control unit are provided. In order to initiate an inflation cycle the control unit opens a first valve in the supply line upstream of the first air cell while keeping the remaining valve in a closed state. The control unit is arranged to open the remaining valves along said series of air cells sequentially such that, after the first air cells has been inflated, the valve upstream of the second air cell is opened to inflate the second air cell, etc. until all air cells along said series of air cells are inflated. After inflation of all air cells the control unit stops the pump and the venting line is opened to deflate the air cells. It is apparent that in such an arrangement for sequentially inflating air cells in a distributed arrangement of air cells a large number of electrically controllable valves is needed. This is not only a drawback because of the costs of the controllable valves, but also make set up and installation of the massage system time consuming since cables connecting the control unit with each of the large number of controllable valves have to be installed.

In WO 2015/039701 A1 a massage system for a vehicle seat is described which operates with a substantially reduced number of controllable valves by effecting delay of inflation between subsequent air cells pneumatically with flow resistors. The preamble of claim 1 is based on this document WO 2015/039701 A1. The pneumatic massage device comprises an array of distributed inflatable air cells equipped with an air conduit structure which is connectable to a pump and which has for each air cell of the array a flow connection for air flow to and from the air cell. In the particular embodiments disclosed there are for example one or two columns of air cells arranged as series of subsequent air cells. For example two parallel columns of air cells are combined with a main air conduit extending along the columns, for example in between the columns, and having a flow connection to each of the air cells. Between an access port of the main air conduit and the pump a single controllable valve is provided which either allows air from the pump to be conveyed to the main air conduit to start inflation of the air cells, or opens the main air conduit to the environmental atmosphere in order to cause deflation of the air cells. A control unit is connected to the controllable valve and is programmed to switch the valve between inflation state and deflation state. In order to cause a sequential inflation of the air cells along the series of air cells flow resistors are arranged in the air conduit structure in order to generate flow resistance to cause pneumatic delay of inflation of air cells which are further away from flow entry into the main conduit. Due to the flow resistors the total flow resistance is increasing air cell by air cell the further a particular air cell is distanced from the pressurized air flow entry into the air conduit structure. In this manner the height increase due to the expansion of air cells to an inflated state is propagating from the air cell closest to air flow entry through the array of air cells and reaching a pneumatic end region of the array with a time delay. The pneumatic end region of the air cell array is the region where the last air cell(s) reaches its inflated state. In case of a series of air cells the pneumatic end region of the array is the last air cell in the series which is furthest away from the air flow entering the array of air cells and which is the last air cell to reach its inflated state. By properly dimensioning the flow resistance of the flow resistors a desired time offset between each pair of subsequent air cells can be achieved so that a wavefront of inflation propagates through the series of air cells of the array with only a single controllable valve controlling communication with the array of air cells, whereas the relative delay of inflation between pairs of subsequent air cells is achieved by passive flow restrictors.

In WO 2015/039701 A1 the flow resistors are for example arranged and dimensioned in such a manner that the time delay between a cell reaching 80% of its fill capacity to the next subsequent cell reaching 80% of its fill volume is between 0.5 seconds and 30 seconds. The flow resistors disclosed are conduit sections with substantially reduced inner diameter which generate a correspondingly increased flow resistance.

With the above described pneumatic massage device a rolling massage effect is achieved. If the first air cell in a number of parallel linear series of air cells is located in a lower back region of the backrest and the series of air cells extend to an upper part of the backrest, inflation starts in the lower back region of a person seated in a vehicle seat equipped with the massage device. The expansion of air cells due to inflation is then propagating like a wave front from the lower back region to the upper back region. In this example the air cells at the highest vertical level in the backseat are the air cells in the pneumatic end region of the air cell array which reach the inflated state with the time delay after the start of inflation. "Inflated state" in the sense of the present invention does not require that an air cell reached its maximum inflation level since it may be that some air cells in the array, in particular in the pneumatic end region, are not fully inflated at the end of the inflation cycle. An air cell is assumed to have reached its inflated state if its expanded height due to inflation has reached a predetermined percentage of the maximum inflated height of the air cell, for example 80% of the maximum inflated height, or any percentage between 70% and 90%.

In the above described example of a pneumatic massage device the inflation is terminated after an inflation period when the air cell or air cells in the pneumatic end region have reached their inflated state; at this point in time the controllable valve arrangement is, for example under the control of a controller, switched from the inflation state to the deflation state which opens the air conduit structure to the ambient atmosphere for venting off air during deflation of the air cells. Since the flow restrictors are provided by conduit portions with reduced inner diameter to generate flow resistance, the flow resistors cause a pneumatic delay along the array of air cells also during deflation such that deflation starts first in the air cells closest to the venting opening and then propagates through the air cell array to the pneumatic end region. Whereas the pneumatic delay which causes the rolling effect with the inflation expansion propagating along the air cell array like a wave front is desirable during inflation it has been found that a more rapid transition to the deflated state of the air cell array before the next inflation cycle starts is experienced by many people as feeling more comfortable and providing a more effective massage action.

It is therefore an object of the present invention to improve a pneumatic massage device utilizing flow resistors to induce a pneumatic delay of inflation along an array of air cells in such a manner that a more rapid deflation with a less pronounced propagation of deflation along the air cell array is achieved without need for more controllable valves.

This object is achieved by a pneumatic massage device comprising the features of claim 1. Preferred embodiments of the invention are set out in the dependent claims.

According to the present invention at least some of the flow resistors of the array of air cells are asymmetric flow resistors in terms of flow direction. The asymmetric response of the flow resistors depending on the flow direction is arranged such that the flow resistance generated by each asymmetric flow resistor for the flow direction during inflation is higher than the flow resistance generated for flow in opposite direction causing deflation. In this manner the asymmetric flow resistors can be designed and dimensioned such that they generate a desired time offset between subsequent air cells reaching their inflated state, whereas the flow resistance generated for oppositely directed deflation flow is lower. This has the effects that the deflation process as a hole is more rapid, and that the time offset between subsequent air cells along the air cell array is less pronounced compared to inflation.

In a preferred embodiment the asymmetric flow resistors are configured such that the flow resistance during inflation flow is at least twice as high as the flow resistance generated during deflation flow. The asymmetry in terms of the ratio of the flow resistance during inflation flow and the flow resistance during deflation flow may be higher than 2, for example at least 4.

In a preferred embodiment a flow resistor associated with an air cell is integrated into the air cell. Alternatively a flow resistor associated with an air cell is located in the connection of the conduit structure which connection leads to the associated air cell.

In a preferred embodiment the air cells are bellows, each comprising an entry concertina section connected to a connection of the conduit structure and at least one further concertina section on top of the entry concertina section and in flow communication with the entry concertina section. In this embodiment the flow resistor is integrated into the associates air cell by incorporating a valve membrane in the entry concertina section, which valve membrane is arranged to be urged by inflation flow into the entry concertina section and against an entry concertina section wall portion having an opening providing flow communication with the at least one further concertina section of the air cell. The valve membrane has perforations in the area facing the opening to restrict the flow through the opening by the perforation when the valve membrane is urged against the concertina section wall portion, whereas the valve membrane is arranged to be lifted off the entry concertina section wall portion by deflation air flow through the opening into the entry concertina section to thereby allow air to flow out of the opening and into an intermediate space between the lifted off valve membrane and the entry concertina section wall portion, and to further flow to an outer edge of the valve membrane were one or more open edge sections allow air to bypass the perforations of the valve membrane, to thereby provide asymmetric flow restriction with a lower flow resistance during deflation compared to inflation. The edge of the valve membrane is, except for the open edge sections, connected to the entry concertina section wall portion.

In a preferred embodiment in which a flow resistor is incorporated in a connection of the conduit structure leading to the air cell the flow resistor is established by providing in series connection with adjoining portions of the connection a serially connected inflatable bellows having at least one concertina section. The valve membrane is disposed in the concertina section and is arranged to be urged by inflation flow into the concertina section and against a concertina section wall portion having an opening in flow communication with an adjoining portion of the connection. The valve membrane has perforations in the area facing the opening to restrict the flow through the opening by the perforations when the valve membrane is urged against the concertina section wall portion by inflation flow, whereas the valve membrane is arranged to lifted off the concertina section wall portion by deflation air flow through the opening into the concertina section to thereby allow air to flow out of the opening and into an intermediate space between the lifted off valve membrane and the concertina section wall portion, and further to an outer edge of the valve membrane were one or more open edge sections allow air to bypass the perforations of the valve membrane, to thereby provide asymmetric flow restriction with lower flow resistance for deflation flow compared to inflation flow.

In a preferred embodiment the array of air cells comprises at least one series of subsequent air cells. The asymmetric flow resistors are arranged such that the flow resistance is increasing starting from a first air cell of the series along the series of air cells air cell by air cell to a last air cell in the series of air cells such that the air cells are inflated in sequence with the time offset between each pair of subsequent air cells reaching their inflated states, whereas during deflation the time offset between pairs of subsequent air cells for reaching a deflated state is shorter than during inflation.

According to a preferred embodiment the array of air cells comprises a main conduit connectable to a pump for receiving pressurized air, and a plurality of air cells arranged along the main conduit. Each air cell communicates via a connection with the main conduit, and has an integrated flow resistor as described above. The air cells and the respective flow connections the main conduit are distributed at different distances along the main conduit thereby forming one or more series of air cells along the main conduit. Two series of air cells can for example be formed if connections extend from the main conduit in opposite lateral directions so that two columns of air cells are formed. In principle from one side of the main conduit connections with different lateral length may extend such that more than one column can be formed on one side of the main conduit.

In a preferred embodiment the main conduit of the array extending along a straight line, and air cells are connected to the main conduit to form a linear series of air cells.

In a preferred embodiment the flow resistors are dimensioned and arranged such that the time offset between an air cell reaching its inflated state and the next subsequent air cell in the series of air cell reaching its inflated state is above 0.5 s, preferably above 1 s. As mentioned above the inflated state may for example be defined as inflation to 80% of the maximum inflation height of the air cell, or any other value for example for the range between 70 and 90%.

The invention will in the following be described in connection with embodiments illustrated in the drawings in which:
Fig. 1 shows a block diagram of a vehicle seat massage system including a pneumatic massage device according to the present invention;
Fig. 2 shows a block diagram of alternative embodiments of the vehicle seat massage system with pneumatic massage devices having various air cell array patterns;
Fig. 3 shows a air cell array of a pneumatic massage device together with a graph showing an inflation and deflation cycle of the array together with a graph showing the height of the air cells as a function of time during inflation and deflation;
Fig. 4 shows the same air cell array as Fig. 3 together with a graph showing a number of inflation and deflation cycles showing the pressure in the air cells as a function of time during inflation and deflation;
Fig. 5 shows the same air cell array as Figs. 3 and 4 together with a graph showing a number of inflation and deflation cycles indicating the flow into the air cells as a function of time during the inflations and deflations;
Fig. 6 shows an exploded view of the air cell array of Figs. 3 to 5;
Fig. 7 shows an exploded view of an individual air cell comprising an integrated flow resistor;
Fig. 8a) to h) show an air cell with integrated flow resistor in a sequence of states during inflation and deflation;
Fig. 9a) to f) show a connector with an integrated flow resistor in a sequence of states during inflation and deflation, which connector may be part of a connection leading to an air cell;
Fig. 10a) to d) show a block diagram of a vehicle seat massage system including a pneumatic massage device having a pneumatically controlled valve in cross-section in a sequence of states during inflation and deflation; and
Fig. 11 shows a cross-sectional view of the pneumatically controlled valve of Fig. 10.

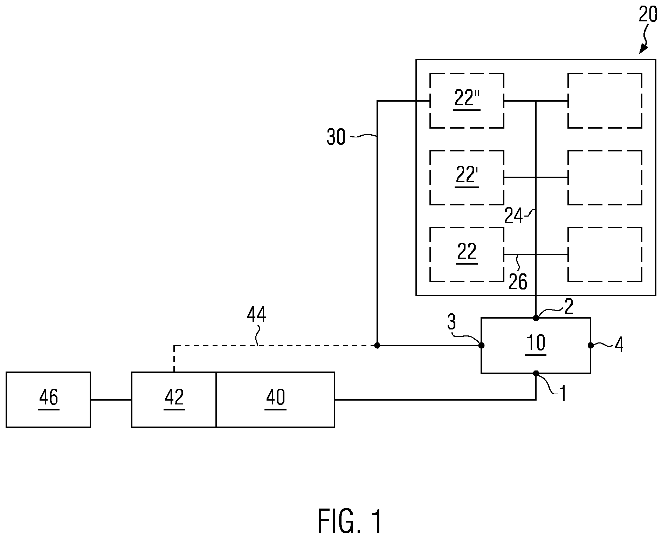

Fig. 1 shows an overview in form of a schematic block diagram of a vehicle seat massage system including a pneumatic massage device. The massage system comprises pneumatic massage device with an air cell array 20 including six air cells 22, 22', 22''. The air cells 22, 22', 22" are arranged in two linear series of three air cells 22, 22', 22" in parallel columns. The air cell array 20 further comprises a main conduit 24 from which connections 26 branch off, each connection 26 being connected to an associated air cell.

One end of the main conduit 24 forms an access port of the air cell array 20, which access port is connected to an array port 2 of a pneumatically controlled valve 10. The pneumatically controlled valve 10 has, besides its array port 2, a pump port 1 which is connected by a conduit to a pump 40. The pneumatically operated valve 10 further has a control port 3 and a venting port 4 communicating with the environmental atmosphere. In the embodiments described with reference to the Figures a pneumatically controlled valve 10 is disclosed as valve arrangement. However, it should be noted that any other type of valve can be utilized in a pneumatic massage device for controlling air flow into the air cell array during inflation and for venting off air from the air cell array during deflation, for example as shown in above-mentioned WO 2015/039701 A1.

The control port 3 of the pneumatically controlled valve 10 is connected to a feedback line 30. The feedback line 30 is, with its end opposite to the end connected to the control port 3, connected to a pneumatic end region of the air cell array 20, in this case to a last (third) air cell 22" in one of the two linear series of air cells 22, 22', 22".

The massage system further comprises besides the pneumatic massage device the pump 40, a pump controller 42, and an electric power supply 46 for the pump 40 and the pump control 42.

The air cell array 20 further comprises flow resistors (not shown). The flow resistors generate a flow resistance during inflation to achieve a desired pneumatic dynamical behaviour of the air cell array; in particular, the flow resistors increase the time offset between each pair of subsequent air cells in the series, namely 22 - 22' and 22' - 22", reaching an inflated state. The two air cells 22 in the first row of the two columns first reach their inflated state, whereafter air cell 22' follows with a time offset to reach the inflated state, and finally air cell 22' reaches its inflated state. The air cells in the parallel column of air cells are inflated in simultaneously with the air cells 22, 22', 22". In this manner the state of inflation propagates along the two columns like a wavefront through the air cell array 20 until the air cells 22" in the pneumatic end region of the air cell array 20 reach their inflated state.

This pressure increase in the last air cell 22" is returned by the feedback line 30 to the control port 3 of the pneumatically controlled valve 10. The pneumatically controlled valve 10 is configured such that it switches from an inflation state to a deflation state when the pressure at the control port 3 exceeds a threshold pressure. In the inflation state the pneumatically controlled valve 10 permits pressurized air from the pump 40 to enter through the pump port 1 and to flow out of through the array port 2 connected to the access port of the air cell array 20. In the deflation state the pneumatically controlled valve 10 permits air flow from the array port 2 to the venting port 4 such that during deflation air flow from the air cells is flowing through the array port 2 and further through the venting port 4 to be vented off to the atmosphere.

According to the present invention asymmetric flow resistors are utilized in the air cell array of the pneumatic massage device as will be described in more detail further below. Asymmetric flow resistors generate a flow resistance depending on the flow direction through the resistor, and in the present case generate a higher flow resistance in the flow direction of inflation flow than for deflation flow in reverse direction.

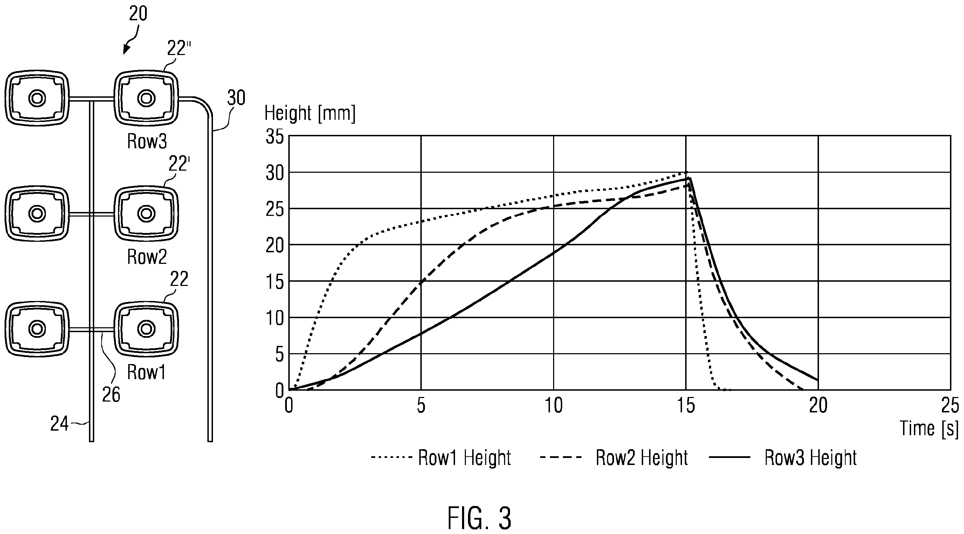

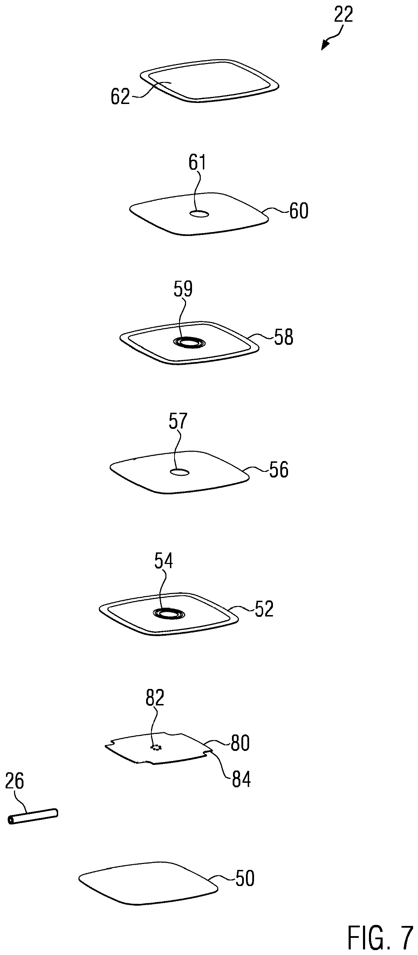

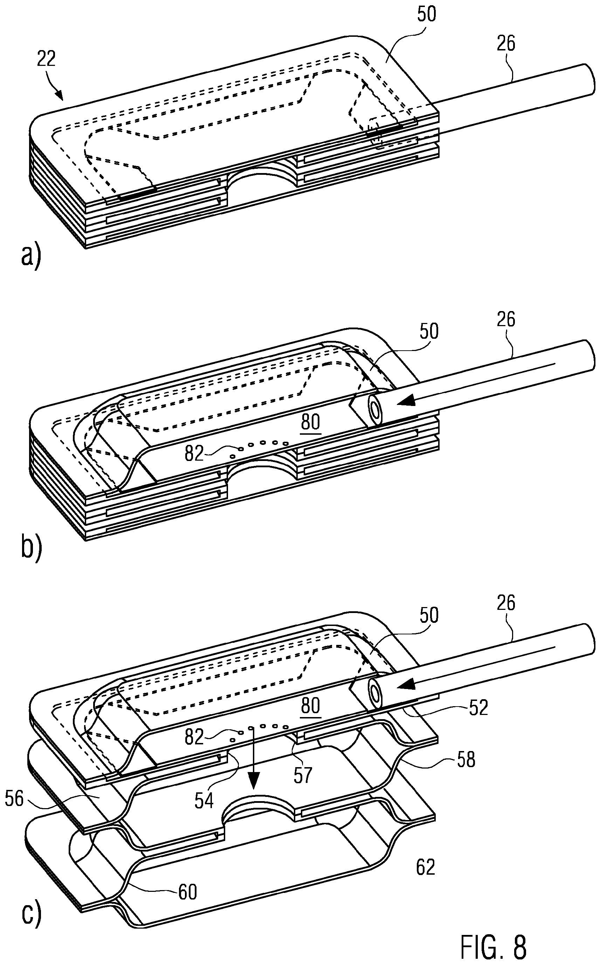

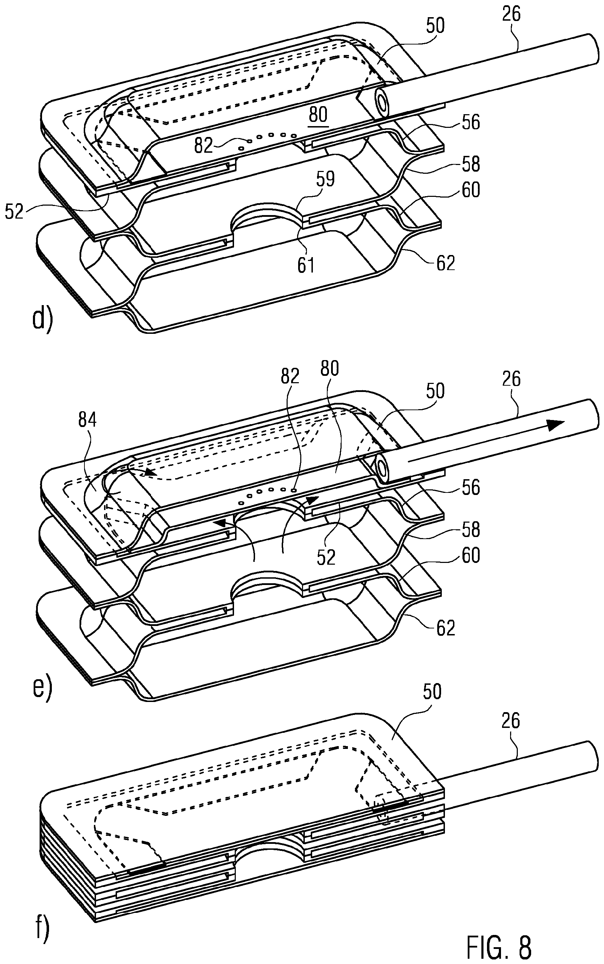

The operation of the air cell array 20 will now be described with reference to Figs. 3 to 5. Fig. 3 shows on the left hand side a schematic view of the air cell array 20 of the pneumatic massage device. The air cells of this embodiment are bellows having three bellows or concertina sections on top of each other which are communicating via a central opening. An exemplary design of such bellows as inflatable air cells will be described further below in connection with Figs. 7 and 8. Such bellows as air cells undergo a significant height increase during inflation, in the example of Fig. 3 a height increase leading to an inflated height slightly below 30 mm.

The graph of Fig. 3 shows the inflation process of the air cell array 20 as height of the air cells 22 (row 1), 22' (row 2) and 22" (row 3) undergoing inflation as a function of time. When pressurized air is supplied by the pump through the valve arrangement 10 to the main conduit 24 the two air cells 22 in row 1 first start to inflate as shows the rapid height increase within about the first three seconds, whereafter a slower height increase phase follows up to 15 seconds (inflation cycle time) for reaching the maximum height 30 mm. The two air cells 22' in row 2 start to inflate with the time offset relative to the air cells 22 of row 1, and have a lower rate of height increase per unit time such that the air cells 22' reach their inflated state of 80% of the maximum height (30 mm) with a time offset of about 3.5 seconds between the air cell 22 of row 1 and the air cell 22' of row 2. The air cells 22" of row 3 start to be inflated with an even lower weight of height increase per unit time (i.e. with a lower slope in Fig. 3) and reach their inflated state with a further time offset of about 3.5 seconds compared to air cells 22' of Row 2.

The entire inflation cycle shown in Fig. 3 extends over about 15 seconds in which a user seated in a seat provided with such pneumatic massage device first experiences a height increase in the lower part of the back (if the air cell array 20 is located under the cover of a backrest of a vehicle seat) which height increase is felt as a pressure acting on the lower part of the back, whereafter the height increase propagates or travels further up the back through row 2 and finally up to row 3 in an upper part of the back. After about 15 seconds the inflation cycle is terminated. This is the case when the pressure in the feedback line 30 communicating with the control port 3 of the pneumatically controlled valve 10 exceeds the threshold value which switches the valve 10 from the inflation state to the deflation state connecting the main conduit 24 to the venting port 4 of the valve 10, and then the pump is turned off.

Due to the asymmetric flow resistors in the pneumatic massage device of the present invention deflation takes place more rapidly than inflation, as can be seen in Fig. 3, and with a less differences in the behaviour of the air cells of Row 1, Row 2 and Row 3. This is due to the fact that in the embodiment illustrated in Fig. 3 asymmetric flow resistors have been used which generate a significantly higher flow resistance for flow in inflation flow direction compared to flow in the opposite deflation flow direction. Therefore, deflation of the entire air cell array 20 takes place in a much shorter period of time than inflation.

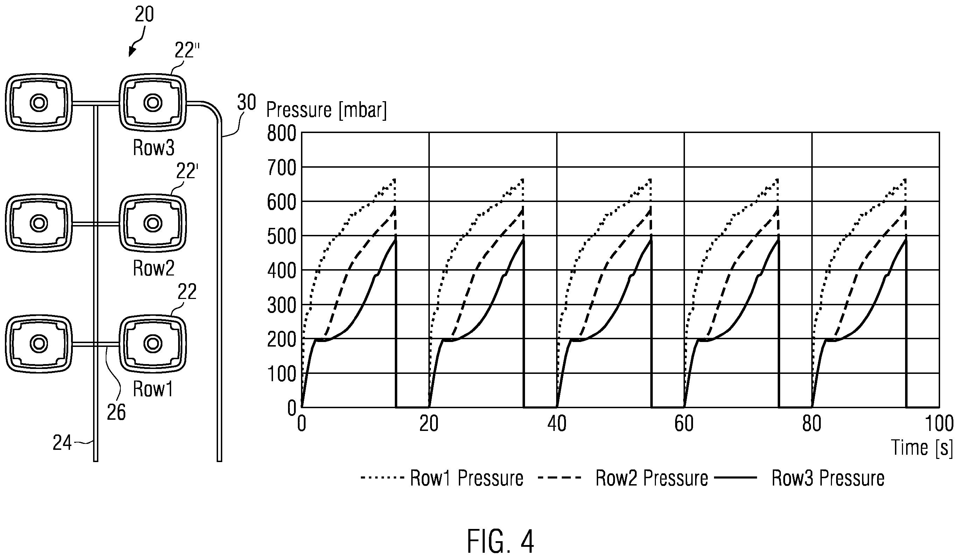

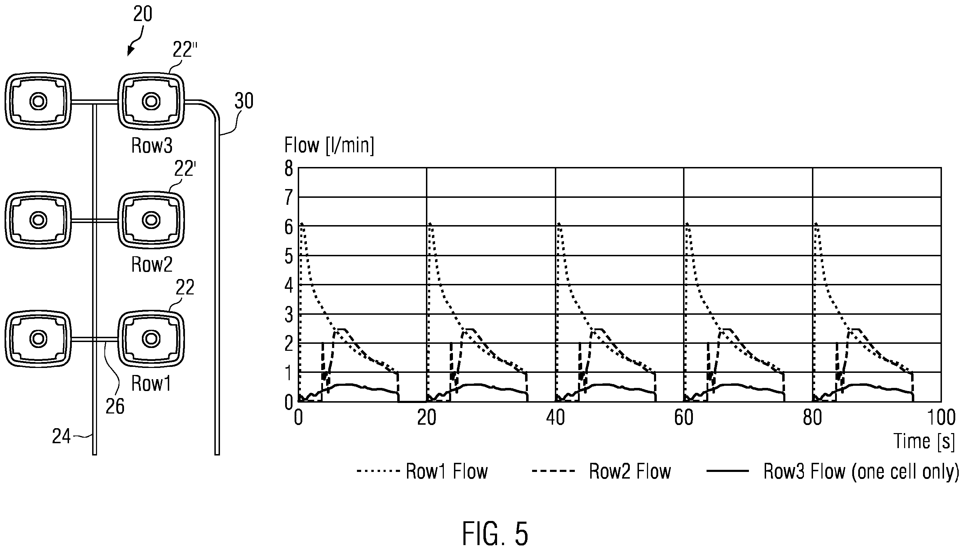

Figs. 4 and 5 show for the same air cell array 20 as in Fig. 3 several inflation/deflation cycles, wherein in Fig. 4 the pressure in the air cells of Row 1, Row 2 and Row 3 is shown as a function of time, and wherein in Fig. 5 the flow to and from the air cells of Row 1, Row 2 and Row 3 is shown as a function of time.

The operation of the pump 40 can be coordinated with the inflation/deflation of the air cell array, as will be explained with reference to Fig. 1. The pump controller 42 starts operation of the pump 40 if the massage system is to be activated. When the pump 40 delivers pressurized air to the pump port 1 of the pneumatically controlled valve 10 the valve is thereby switched to inflation state (as will be described in more detail further below), and the pressurized air is conveyed via the array port 2 through the access port of the air cell array 20 into the main conduit 24. In this manner the air cells 22, 22' and 22" are successively inflated. When the last air cell 22" at the pneumatic end region reaches its inflated state and the pressure in the feedback line 30 reaches a threshold pressure this causes the pneumatically controlled valve to switch to the deflation state to deflate the air cell array 20 when pressure supply from the pump 40 has been terminated. For the deflation cycle operation of the pump 40 should be stopped. This can be achieved in different manners. One way is to provide a pressure sensor in communication with the feedback line 30, which pressure sensor is connected by connection 44 to the pump controller 42. The pump controller is arranged to monitor the sensor signal of the pressure sensor and to turn off the pump 40 as soon as the pressure sensor delivers a sensor signal indicating that the pressure in the feedback line reached threshold pressure. As an alternative to a pressure sensor a pressure switch could be utilized, which pressure switch is calibrated to switch at the threshold pressure and to deliver a corresponding output signal to the pump controller 42 via line 44, whereafter the pump controller 42 terminates operation of the pump 40.

As an alternative to turn off the pump based on the pressure in the feedback line 30 the pump controller 22 can be arranged to sense the current supplied to the pump; in particular the pump controller can be arranged to detect a current increase in the current supply to turn off the pump in response thereto. The detected current increase is the result of lower and lower flow at the end of the inflation cycle when the remaining available inflation volume in the air cell array is approaching zero.

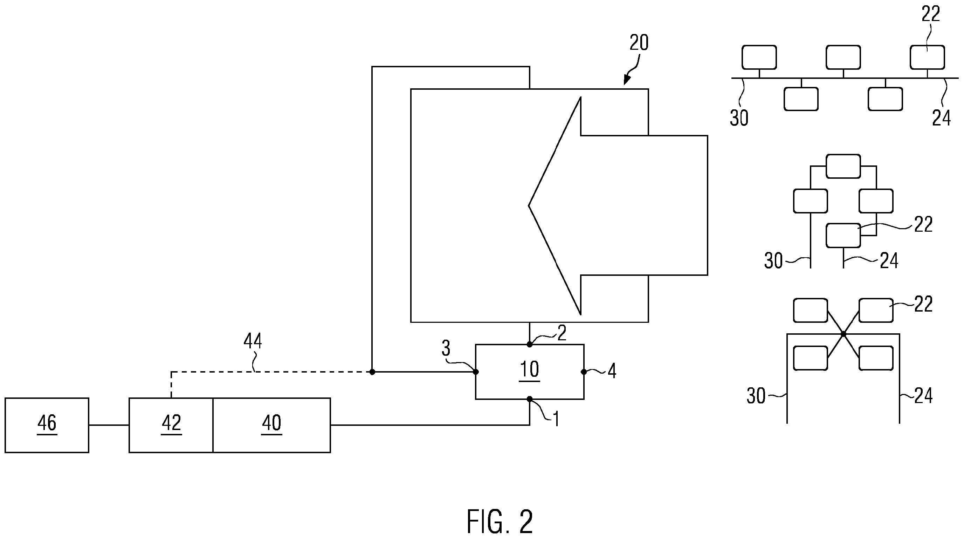

Fig. 2 shows a schematic block diagram corresponding to the block diagram in Fig. 1 but illustrating various air cell patterns in the air cells array 20 which could utilized in the air cell array 20. On the right hand side of Fig. 2 three air cell connection patterns are shown which can be used or may be part of the air cell array 20. In the upper sketch a linear series of cells 22 is shown which are arranged along a linearly extending main conduit 24. Flow connections branching off the main conduit 24 are connecting the air cells 22 to the main conduit 24. If the linear series of air cells as shown in the upper sketch on the right hand side of Fig. 2 is used in the air cell array 20 of the block diagram of Fig. 2 one end of the main conduit 24 would be communication with the pump port 2 of the valve 10, the main conduit 24 would extend vertically in the view of the block diagram of Fig. 2 and the opposite end of the main conduit 24 would be in communication with the feedback line 30.

The air cell pattern shown in the sketch in the middle on the right hand side of Fig. 2 also show a serial pattern, but in this case the main conduit 24 connects the subsequent air cells 22 in series, i.e. each air cell 22 has an input and an output and the main conduit 24 consists of several conduit portions connecting output and input of subsequent air cells 22 in this "in series" connection of air cells. In addition, the air cells 22 are not arranged as a linear series but as a ring. In the air cell pattern shown in the lowest sketch on the right hand side of Fig. 2 air cells 22 are connected with main conduit 24 in a star arrangement. The end of the main conduit designated by reference numeral 24 is in communication with the pump, and the opposite end of the main conduit is in communication with the feedback line 30. In this configuration of air cells and conduit structure the flow resistors of the two upstream air cells (the two air cells closer to the main conduit 24) have a lower flow resistance as the flow resistors to the two downstream air cells so that the two downstream air cells are inflated with a time offset relative to the two upstream air cells.

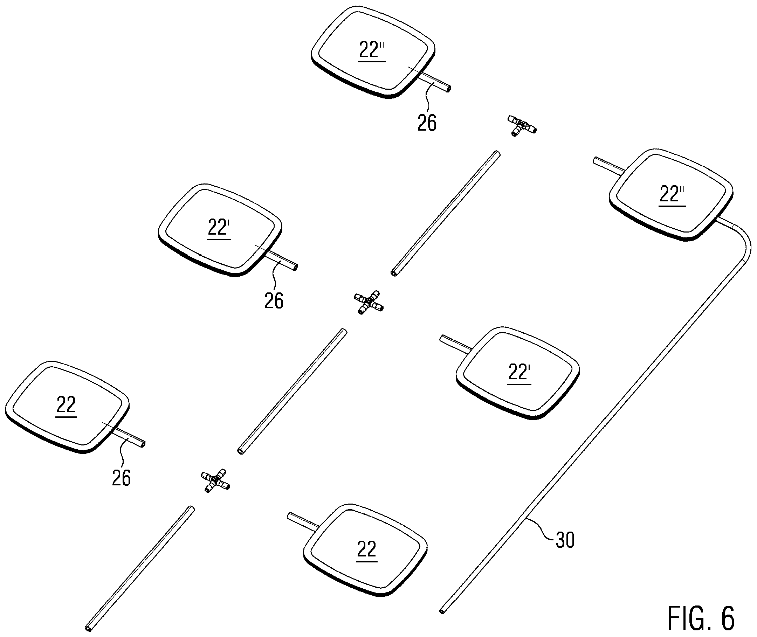

Fig. 6 shows an exploded view of an air cell array 20 as described before, including a central main conduit from which air cell flow connections 26 branch off at three distances along the main conduit 24 to air cells 22, 22' and 22" on opposite sides of the main conduit 24. One of the last air cells 22' in the third row of the two columns of three air cells 22, 22' and 22" has an output to which the feedback line 30 is connected.

A preferred design of an air cell that can be used in connection with the present invention is shown in an exploded view in Fig. 7. As indicated above, a preferred type of air cell used in connection with the present invention is a bellows air cell, in this case comprising three bellows or concertina sections on top of each other as will now be described. As shown in Fig. 7 the air cell bellows comprises several layers of polyurethane film. The first two layers 50, 52 are sealed together at their outer edges. The air flow connection 26 is leading to the interior between the film layers 50, 52, wherein the entry region of flow connection 26 is sealed so that the interior between the first two layers 50, 52 can be inflated. The upper film layer 52 has a central opening 54. The connected first two layers form an entry concertina section.

A further pair of film layers 56, 58 forms the second concertina section of the bellows. Again the pair of film layers 56, 58 is sealed together at their outer edges. Film layer 56 comprises a central opening 57 which is aligned with central opening 54 of film layer 52. Film layer 56 is sealed to film layer 54 along a line surrounding the central openings 54 and 57.

Further film layers 60 and 62 form the third concertina section, wherein the further film layer 60, 62 are likewise sealed together round their outer edges and wherein film layer 60 comprises a central opening aligned with the central opening 59 of the film layer 58 underneath it. Film layers 60 and 58 are sealed to each other along a line surrounding the central openings 59, 61.

In this manner a bellows with a first or entry concertina section formed by film layers 50, 52, a second concertina section formed by film layers 56, 58, and a third concertina section formed by film layers 60 and 62 is provided, wherein flow connection 26 is communicating with the interior of the first concertina section formed by film layers 50 and 52. By supplying air flow through the flow connection 26 the three concertina sections on top of each other are inflated, wherein the inflation causes significant increase of height from a state in which the two film layers of a concertina section are in flat state in abutment on each other to an inflated state in which the film layers of a concertina section are urged apart from each other except for their sealed outer edges. Air flow from the flow connection 26 is expanding the first concertina section made of film layers 50 and 52, wherein the flow is communicated from the first concertina section through the central openings 54 and 57 to the second concertina section 56, 58, and further through central opening 61 to third concertina section 60, 62.

The bellows type air cell design described so far is conventional. There are also designs with only two concertina sections on top of each other.

According to a preferred embodiment of the present invention the air cell 22 of Fig. 7 comprises an asymmetric flow resistor integrated into the air cell 22. The flow resistor comprises a valve membrane 80 which may likewise be made of polyurethane film. The valve membrane 80 comprises perforations 82 in a central region thereof, which perforations are aligned with the central opening 54 of the film layer 52 on top of it. The valve membrane 80 is, along major parts of its outer edge, sealed to the film layer 52 on top of it, except for the cut-out corner regions 84 of the valve membrane 80 which are not connected to the film layer 52 and thus form open edge sections.

The function of this arrangement of the valve membrane 80 in the air cell 22 is as follows. In the initial deflated state the film layers of the air cell 22 are, except for the region where the tube of the flow connection 26 is inserted between the film layers 50 and 52, in a flat state with the film layers 50, 52, 56, 58, 60 and 62 on top of each other, wherein the valve membrane 80 is sandwiched between the film layers 50 and 52 and sealed at its outer edge to the film layer 52 except for the cut-out corner regions 84. When pressurized air is supplied through the tube of the flow connection 26 the film layers 50 and 52 start to separate from each other in their central regions. While the flow of air through the tube of flow connection 26 continues the valve membrane 80 is pressed against the entry concertina section wall portion 52 on top of it such that pressurized air that can leave the interior space of the first concertina section between the film layers 50 and 52 only through the through the perforation 82 of the valve membrane 80 and further through the central opening 54 of the film layer 52 to the next concertina section. Due to the restricted openings of the perforations 82 the valve membrane 80 in this manner generates a high flow resistance upon inflation of the air cell 22 with pressurized air flowing in inflation direction.

The function of the valve membrane is different during deflation as will first be explained with reference to Fig. 7 and later on with reference to Fig. 8. During deflation pressurized air from the upper concertina sections of the air cell 22 is flowing towards the entry concertina section between film layers 50 and 52 to flow into this entry concertina section through central opening 54 of film layer 52. Due to this air flow through opening 54 towards the tube of the flow connection 26 a central portion of the valve membrane 80 is bulged away from lifted off the entry concertina section wall portion 52 by deflation air flow through the opening 54 into the entry concertina section. As a result air flows out of the opening 54 and into an intermediate space between the lifted off valve membrane 80 and the entry concertina section wall portion 52 and further to the outer edge of the valve membrane 80 where the open edge sections 84 at the corners allow air to bypass the perforations 82 of the valve membrane 80.

Thus, during deflation air can also flow through opening 54 and into a gap between the entry concertina section wall portion 52 and the valve membrane 80 and can flow towards the corner sections 84 of the valve membrane 80 where the valve membrane is not sealed to the film layer 52. Therefore, air can flow through opening 54 and through the open corner edge sections 84 into the interior of the first concertina section and be vented off through the tube of flow connection 26, thereby circumventing or bypassing the perforations 82 of the valve membrane. Since the flow resistance for flowing through the open corner section 84 is significantly lower than the flow resistance for flow through the perforations 82 of the valve membrane 80 the flow resistor established by the valve membrane 80 in this manner is an asymmetric flow resistor generating a high flow resistance for the flow direction during inflation, and a low flow resistance for the flow direction during deflation of the air cell.

The described function and design of the air cell with its integrated flow resistor is further illustrated in the perspective cross-sectional views of Fig. 8a) to h) showing a sequence of states during inflation and deflation of the air cell 22. Fig. 8a) shows the air cell 22 in the completely deflated state, wherein it should be noted that the air cell is turned upside down compared to the illustration of Fig. 7, i.e. in the view of Fig. 8a) the film layer 50 is illustrated as upper film layer.

In Fig. 8b) inflation has started and air is flowing into the first concertina section between film layers 50 and 52, wherein due to the flow direction during inflation the valve membrane 80 is pressed onto the film layer 52 (see Fig. 8c)); this film layer 52 is also referred to as entry concertina section wall portion. Since the valve membrane is pressed onto this wall portion 52 air can leave the first concertina section between film layer 50 and wall portion 52 through openings 54, 57 only after passing through the perforations 82 of the valve membrane 80 as indicated by the arrow in Fig. 8c). For this reason a high flow resistance is generated by the valve membrane 80 during inflation of the air cell 22. In the state of Fig. 8c) the second concertina section between the film layers 56 and 58, and the third concertina section between the film layers 60 and 62 have already been inflated. This inflated state is also shown in Fig. 8d) in which inflation air flow has been stopped.

In Fig. 8e) deflation has already started and air is flowing out of the tube of flow connection 26 as indicated by the arrow. Air from the concertina sections between film layers 56 and 58 and between film layers 60 and 62 is pressing onto the valve membrane 80 and is urging it in its central portion away from entry concertina section wall portion 52. This opens a flow space between this wall portion 52 and the membrane 80 where air can now flow to the open corner sections 84 and thereby enter the interior of the first concertina section to flow towards and out of the tube of the flow connection 26. In this manner the out flowing air flow during deflation can bypass the perforations 82 and flow through the larger open corner edge sections 84 of the valve membrane which are not sealed to the film layer 52. In this manner the asymmetric flow resistor formed by the cooperation of the valve membrane 80 with the film layer 52 generates a high flow resistance through the perforations 82 during inflation flow, and a low flow resistance during deflation flow as shown in Fig. 8e).

After all air left the air cell 22 eventually, the deflated state show in Fig. 8 f) is reached, wherein all film layers are in a flat configuration on top of each other again (except for the region where the tube of the flow connection 26 enters the interior between film layers 50 and 52).

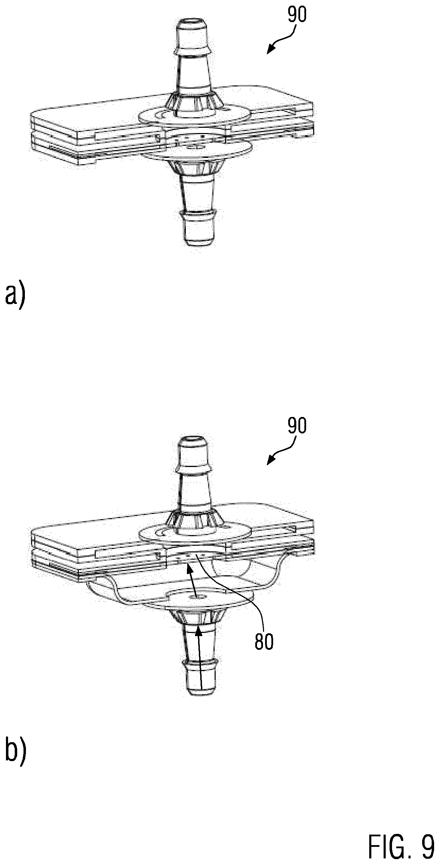

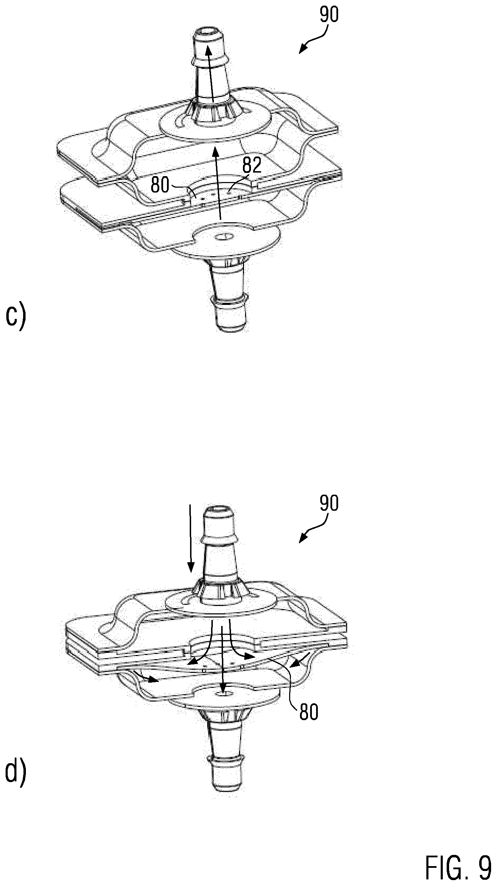

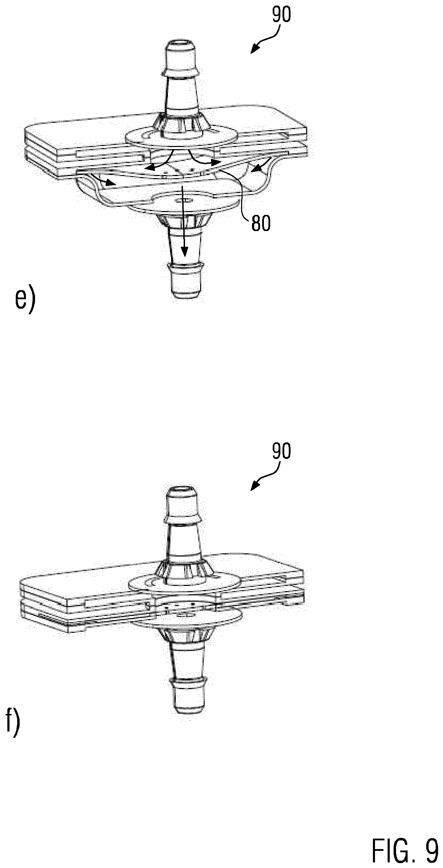

Fig. 9 shows a similar sequence of states of a connector including an asymmetric flow resistor working according to the same principle, which connector can be incorporated in the conduits or flow connections between air cells if, in contrast to the above described embodiment, the flow resistor is not integrated into an air cell. The connector 90 also has concertina sections and a valve membrane 80 with perforations 82 (see Fig. 9b) and c)). Air flows during inflation in the direction shown by the arrows in Figs. 9b) and c). Again, the valve membrane 80 is pressed by this air flow against the adjacent layer including an opening to the following concertina section. Therefore, the air has to pass the small opening area of the perforations 82 which generates a high flow resistance in the flow direction of inflation shown in Figs. 9b) and c).

For flow in the opposite deflation direction shown in Fig. 9d) the valve membrane 80 is in its central area again urged away from the adjacent layer so that air can flow in between the adjacent layer and the valve membrane 80 to the corner regions, where the valve membrane is not sealed to the adjacent layer, and can flow out through the open corner edge sections as described before in connection with Fig. 8, thereby bypassing the perforations 82.

In Fig. 9 e) the upper concertina section of the connector 90 is already almost deflated and the remaining small amount of air is leaving, whereafter also the lower concertina section continues to be deflated to finally reach the deflated state of the flow connector 90 shown in Fig. 9f).

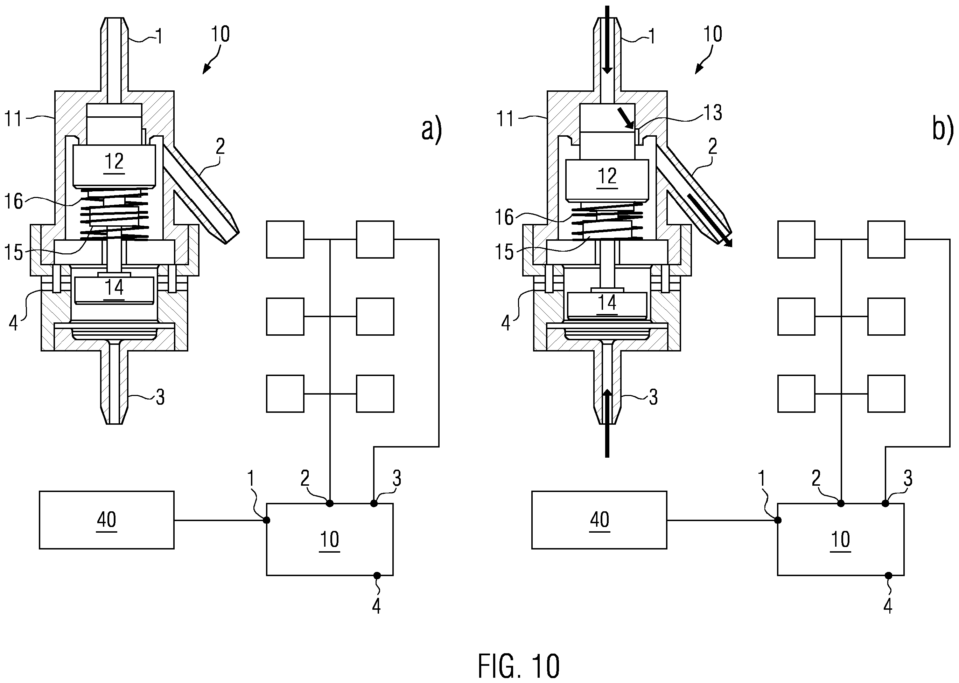

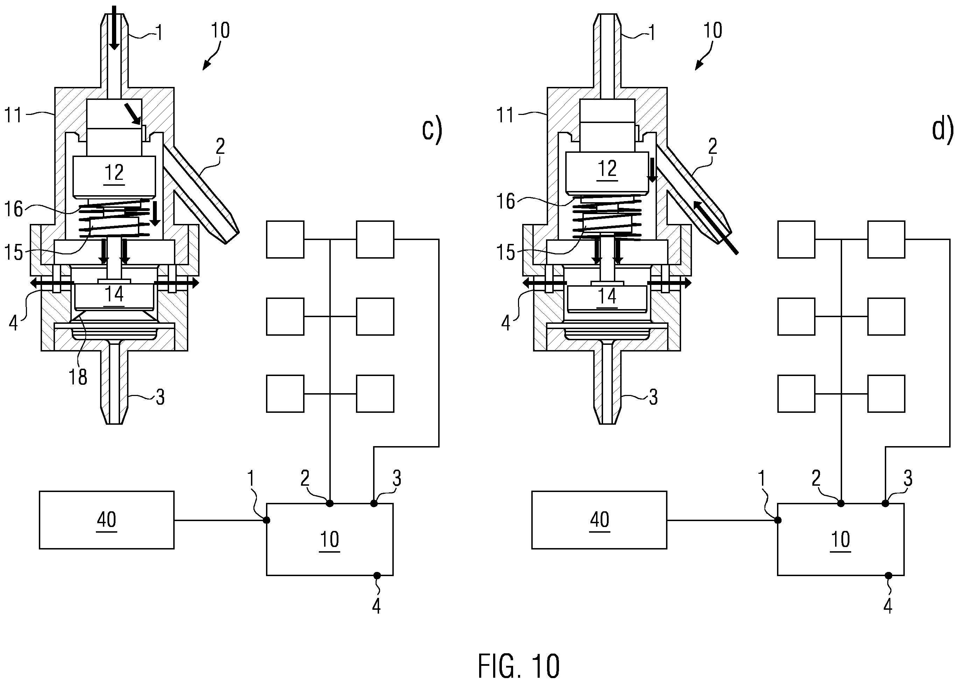

In the following the operation of the pneumatically controlled valve during an inflation and deflation cycle will be described in connection with Figs. 10 a) to d) showing a block diagram of a massage system and a cross-sectional view of the pneumatically controlled valve 10 in a sequence of states during the cycle. Valve 10 comprises a valve housing 11. The pump port 1 and the control port 3 are located at opposite end faces of the housing 11. In the valve housing 11 a valve chamber is defined, and the array port 2 and the venting port communicate with the valve chamber and are both located on a sidewall of the valve housing between the end faces. In the valve chamber a piston 12 is slidable mounted in longitudinal direction defined by the opposing pump and control ports 1, 3. The piston 12 consists of several sections of different diameters including an intermediate stem carrying a release button 14 at its lower end. A spring 16 is supported by an internal wall member within the valve chamber, which wall member has a central opening through which the stem of the piston extends and which establishes a flow connection paths between the valve chamber regions above and below the wall member. The opposite end of the spring 16 is in abutment on an upper portion of the piston 12 and exerts a bias force in the direction towards the pump port 1.

Close to the end of the valve chamber next to the controlled port 3 a membrane 18 seals of the valve chamber and separates the valve chamber from and internal space formed in the housing part of the control port 3.

Fig. 10 a) illustrates the state before start of an inflation cycle. The spring 16 urges the piston 12 against a shoulder formed in the valve chamber so that the pump port 1 is not in flow communication with the array port 2; in this state there is an open flow path out of the air cell array through the array port 2, the valve chamber, the central opening of the wall member and to the venting port 4 so that in principle deflation could take place.

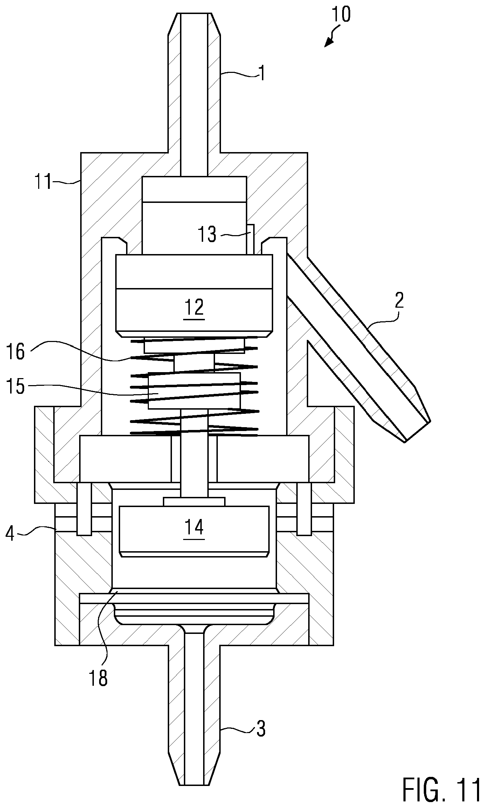

In Fig. 10 b) the pump has started to deliver pressurized air through the pump port 1 as indicated by the arrow in Fig. 10 b). As a result the piston 12 is displaced in longitudinal direction against the bias force of the spring 16 and away from the pump port 1. This displacement moves the upper tip of the piston 12 past a bypass channel 13 (see Fig. 11) in an inner wall of the valve chamber, thereby establishing flow communication between the pump port 1 and the valve chamber as indicated by the arrows in Fig. 10 b). From the valve chamber the pump flow is flowing through the array port 2 to inflate the air cell array. In this displaced state of the piston 12 a seal member 15 is in abutment on the inner wall member in the valve chamber and seals off its central opening so that there is no communication between the upper part of the valve chamber (through which pump air flow flows to array port 2) and the venting port 4. With increasing pressure in the pneumatic end region of the air cell array this pressure acts through the feedback line at the control port 3 as indicated by the arrow in Fig. 10 b).

When the pressure at the control port 3 exceeds the threshold pressure the membrane 18 in the housing part of the control port 3 is bulged inwardly and comes into abutment on the lower end face of the release button 14, thereby displacing the piston 12 in longitudinal direction towards the pump port 1, as shown in Fig. 10 c). In the situation of Fig. 10 c) the pump is still supplying air flow to pump port 1. This air flow flows through the valve chamber and out of the venting port 4; this pump pressure in the valve chamber is still also present at the array port 2 such that in the state of Fig. 10c) in which the pump still operating deflation of the air cell array has not yet started to a significant extent.

In the state of Fig. 10 d) the pump controller has turned off pump 40. In the absence of pump pressure air flow from the air cell array is now flowing through the array port 2, the valve chamber and out of the venting ports 4.

## Claims

1. Pneumatic massage device for a vehicle seat comprising:
an array (20) of distributed inflatable air cells (22, 22', 22") equipped with an air conduit structure (24, 26) which is connectable to receive pressurized air for inflation and to vent off air from the air cell array for deflation, and which has for each air cell a flow connection (26) for air flow to and from the air cell;
a valve arrangement (10) for controlling flow into and out of the air cell array by selectively establishing inflation and deflation states, wherein the valve arrangement is configured to permit, in the inflation state, pressurized air flow to the air cell array, and to permit, in the deflation state, air to flow from the air cells out of the conduit structure for venting off; and
a plurality of flow resistors (50, 82) arranged in the array of air cells such that the flow resistance to the air cells is increasing along the air cell array, and such that expansion of air cells due to inflation is propagating through the array and reaching at last a pneumatic end region of the array with a time delay;
**characterized in that** at least some of the flow resistors (52, 80) of the array (20) of air cells are asymmetric flow resistors in terms of flow direction **in that** the flow resistance generated by each asymmetric flow resistor for the flow direction during inflation is higher than the flow resistance generated for flow in reverse direction during deflation.

2. Pneumatic massage device according to claim 1, **characterized in that** the asymmetric flow resistors (52, 80) are configured such that the flow resistance during inflation flow is at least twice as high as the flow resistance generated during deflation flow.

3. Pneumatic massage device according to claim 2, **characterized in that** the asymmetric flow resistors (52, 80) are configured such that the ratio between the flow resistance during inflation flow and the flow resistance generated during deflation flow is larger than 3, preferably larger than 4.

4. Pneumatic massage device according to any of the preceding claims, **characterized in that** a flow resistor associated with an air cell is integrated into the air cell.

5. Pneumatic massage device according to any of claims 1 to 3, **characterized in that** a flow resistor associated with an air cell is located in the connection (26) leading to the air cell.

6. Pneumatic massage device according to claim 4, **characterized in that** the air cells are bellows comprising an entry concertina section connected to a connection (26) of the conduit structure, and at least one further concertina section on top of the entry concertina section, and **in that** the flow resistor (52, 80) is integrated in the associated air cell by incorporating a valve membrane (80) in the entry concertina section, which valve membrane (80) is arranged to be urged by inflation flow into the entry concertina section against an entry concertina section wall portion (52) having an opening (54) providing flow communication with the at least one further concertina section of the air cell, wherein the valve membrane (80) has perforations (82) in the area facing the opening (54) to restrict the flow through the opening (54) by the perforations (82), whereas the valve membrane (80) is arranged to be lifted off the entry concertina section wall portion (52) by deflation air flow through the opening (54) into the entry concertina section to thereby allow air to flow out of the opening (54) and into an intermediate space between the lifted off valve membrane (80) and the entry concertina section wall portion (52) and to an outer edge of the valve membrane (80) where one or more open edge sections (84) allow air to bypass the perforations (82) of the valve membrane (80), to thereby provide asymmetric flow restriction with a lower flow resistance during deflation compared to inflation.

7. Pneumatic massage device according to claim 5, **characterized in that** the flow resistor (52, 80) is incorporated in a connection (26) to an air cell by providing in series connection with adjoining portions of the connection a serially connected inflatable bellows having at least one concertina section, wherein a valve membrane (80) is disposed in the concertina section and is arranged to be urged by inflation flow into the concertina section against a concertina section wall portion (52) having an opening (54) in flow communication with an adjoining portion of the connection, wherein the valve membrane (80) has perforations (82) in the area facing the opening (54) to restrict the flow through the opening (54) by the perforations (82), whereas the valve membrane (80) is arranged to be lifted off the concertina section wall portion (52) by deflation air flow through the opening (54) into the concertina section to thereby allow air to flow out of the opening (54) and into an intermediate space between the lifted off valve membrane (80) and the concertina section wall portion and to an outer edge of the valve membrane where one or more open edge sections (84) allow air to bypass the perforations (82) of the valve membrane (80), to thereby provide asymmetric flow restriction with lower flow resistance during deflation compared to inflation.

8. Pneumatic massage device according to any of the preceding claims, **characterized in that** the array (20) of air cells comprises at least one series of subsequent air cells (22, 22', 22"), that the asymmetric flow resistors are arranged such that the flow resistance is increasing starting from a first air cell (22) of the series along that series of air cells air cell by air cell to a last air cell in the series of air cells such that the air cells are inflated in sequence with a time offset between each pair of subsequent air cells (22, 22', 22'') reaching their inflated states, whereas the time offset between subsequent pairs of air cells for reaching a deflated state is shorter compared to inflation.

9. Pneumatic massage device according to claim 8, **characterized in that** the array (20) of air cells (22, 22', 22") comprises a main conduit (24) connectable to a pump for receiving pressurized air, and a plurality of air cells (22, 22', 22") arranged along the main conduit (24), each air cell communicating via a connection (26) with the main conduit (24) and having an integrated flow resistor (52, 80), wherein the air cells (22, 22', 22") and the respective flow connections (26) to the main conduit are distributed at different distances along the main conduit (24), thereby forming one or more series of air cells (22, 22', 22'') along the main conduit (24).

10. Pneumatic massage device according to claim 9, **characterized in that** the main conduit (24) of the array is extending along a straight line and that air cells (22, 22', 22") are connected to the main conduit to form a linear series of air cells.

11. Pneumatic massage device according to any the claims 8 to 10, **characterized in that** the flow resistors are dimensioned such that the time offset between an air cell reaching its inflated state and the next subsequent air cell in the series of air cells reaching its inflated state is between 0.5 s and 30 s.

## Patentansprüche

1. Pneumatische Massagevorrichtung für einen Fahrzeugsitz mit:
einem Feld (22) von verteilten aufblasbaren Luftzellen (22, 22', 22"), das mit einer Luftleitungsstruktur (24, 26) versehen ist, die anschließbar ist, um Druckluft zum Aufblasen zu erhalten und Luft aus dem Luftzellenfeldes für die Entlüftung abzulassen, und die für jede Luftzelle eine Fließverbindung (26) für Luftfluss zu und von der Luftzelle hat,
einer Ventilanordnung (10) zur Steuerung des Flusses in und aus dem Luftzellenfeld durch selektives Herbeiführen der Aufblas- und Entlüftungszustände, wobei die Ventilanordnung dazu ausgestaltet ist, um im Aufblaszustand Druckluft in das Luftzellenfeld eintreten zu lassen und im Entlüftungszustand Luft zum Entlüften der Luftzellen aus der Leitungsstruktur heraus fließen zu lassen, und
einer Vielzahl von Fließwiderständen (50, 82), die in dem Feld von Luftzellen so angeordnet sind, dass der Fließwiderstand zu den Luftzellen entlang des Luftzellenfeldes ansteigt und dass sich die Expansion der Luftzellen aufgrund des Aufblasens durch das Feld fortpflanzt und zuletzt eine pneumatische Endregion des Feldes mit einer Zeitverzögerung erreicht,
**dadurch gekennzeichnet, dass** zumindest einige der Fließwiderstände (52, 80) des Feldes (20) von Luftzellen hinsichtlich der Fließrichtung asymmetrische Fließwiderstände sind, so dass der Fließwiderstand, der durch jeden asymmetrischen Fließwiderstand für die Fließrichtung während des Aufblasens erzeugt wird, höher ist, als der Fließwiderstand, der für Fluss in umgekehrter Richtung während der Entlüftung erzeugt wird.

2. Pneumatische Massagevorrichtung nach Anspruch 1, **dadurch gekennzeichnet, dass** die asymmetrischen Fließwiderstände (52, 80) derart gestaltet sind, dass der Fließwiderstand während des Aufblasflusses mindestens zweimal so groß ist wie der Fließwiderstand, der während des Entlüftungsflusses erzeugt wird.

3. Pneumatische Massagevorrichtung nach Anspruch 2, **dadurch gekennzeichnet, dass** die asymmetrischen Fließwiderstände (52, 80) derart gestaltet sind, dass das Verhältnis zwischen dem Fließwiderstand während des Aufblasflusses und dem Fließwiderstand, der während des Entlüftungsflusses erzeugt wird, größer als 3, vorzugsweise größer als 4 ist.

4. Pneumatische Massagevorrichtung nach einem der vorhergehenden Ansprüche, **dadurch gekennzeichnet, dass** ein einer Luftzelle zugeordneter Fließwiderstand in die Luftzelle integriert ist.

5. Pneumatische Massagevorrichtung nach einem der Ansprüche 1 bis 3, **dadurch gekennzeichnet, dass** ein einer Luftzelle zugeordneter Fließwiderstand sich in der Verbindung (26), die zu der Luftzelle führt, befindet.

6. Pneumatische Massagevorrichtung nach Anspruch 4, **dadurch gekennzeichnet, dass** die Luftzellen Faltenbälge sind, die einen Eingangszieharmonikaabschnitt, der mit der Verbindung (26) der Leitungsstruktur verbunden ist, und wenigstens einen weiteren Zieharmonikaabschnitt über dem Eingangszieharmonikaabschnitt umfassen, und dass der Fließwiderstand (52, 80) in die dazugehörige Luftzelle integriert ist, indem eine Ventilmembran (80) in dem Eingangszieharmonikaabschnitt angebracht ist, wobei die Ventilmembran (80) derart angeordnet ist, dass diese während des Aufblasflusses in den Eingangszieharmonikaabschnitt gegen einen Wandbereich (52) des Eingangszieharmonikaabschnitts gedrückt wird, der eine Öffnung (54) hat, die in Fließkommunikation mit dem wenigstens einen weiteren Zieharmonikaabschnitt der Luftzelle steht, wobei die Ventilmembran (80) Perforationen (82) in der der Öffnung (54) zugewandten Fläche hat, um den Fluss durch die Öffnung (54) mittels der Perforationen (82) einzuschränken, wohingegen die Ventilmembran (80) derart gestaltet ist, dass sie sich während eines Luftflusses durch die Öffnung (54) in den Eingangszieharmonikaabschnitt bei Entlüftung von dem Wandbereich (52) des Eingangszieharmonikaabschnitts abhebt, um dadurch zu ermöglichen, dass Luft aus der Öffnung (54) und in einen Zwischenraum zwischen der angehobenen Ventilmembran (80) und dem Wandbereich (52) des Eingangszieharmonikaabschnitts und zu einem äußeren Rand der Ventilmembran (80) fließt, wo eine oder mehrere offenen Randabschnitte (84) es der Luft ermöglichen, die Perforationen (82) der Ventilmembran (80) zu umgehen, um dadurch eine asymmetrische Flusseinschränkung mit einem niedrigeren Fließwiderstand während der Entlüftung im Vergleich zum Aufblasen zu ermöglichen.

7. Pneumatische Massagevorrichtung nach Anspruch 5, **dadurch gekennzeichnet, dass** der Fließwiderstand (52, 80) in eine Verbindung (26) zu einer Luftzelle integriert ist, indem in Reihenschaltung mit benachbarten Abschnitten der Verbindung ein seriell verbundener aufblasbarer Faltenbalg vorgesehen ist, der wenigstens einen Zieharmonikaabschnitt hat, wobei eine Ventilmembran (80) im Zieharmonikaabschnitt angebracht ist und derart gestaltet ist, dass sie während eines Aufblasflusses in den Zieharmonikaabschnitt gegen einen Wandbereich (52) des Zieharmonikaabschnitts gedrückt wird, der eine Öffnung (54) in Fließkommunikation mit einem benachbarten Abschnitt der Verbindung hat, wobei die Ventilmembran (80) Perforationen (82) in der der Öffnung (54) zugewandten Fläche hat, um den Fluss durch die Öffnung (54) mittels der Perforationen (82) einzuschränken, wohingegen die Ventilmembran (80) derart gestaltet ist, dass sie sich während eines Luftflusses durch die Öffnung (54) bei Entlüftung in den Zieharmonikaabschnitt von dem Wandbereich (52) des Zieharmonikaabschnitts abhebt, um damit zu ermöglichen, dass Luft aus der Öffnung (54) und in einen Zwischenraum zwischen der angehobenen Ventilmembran (80) und dem Wandbereich (52) des Zieharmonikaabschnitts und zu einem äußeren Rand der Ventilmembran (80) fließt, wo eine oder mehrere offenen Randabschnitte (84) es der Luft ermöglichen, die Perforationen (82) der Ventilmembran (80) zu umgehen, um dadurch eine asymmetrische Einschränkung mit einem niedrigeren Fließwiderstand während der Entlüftung im Vergleich zum Aufblasen zu ermöglichen.

8. Pneumatische Massagevorrichtung nach einem der vorhergehenden Ansprüche, **dadurch gekennzeichnet, dass** das Feld (20) der Luftzellen wenigstens eine Reihe von aufeinanderfolgenden Luftzellen (22, 22', 22") umfasst, dass die asymmetrischen Fließwiderstände derart angeordnet sind, dass der Fließwiderstand beginnend von einer ersten Luftzelle (22) der Reihe entlang der Reihe von Luftzellen, Luftzelle für Luftzelle zu einer letzten Luftzelle in der Reihe von Luftzellen derart ansteigt, dass die Luftzellen der Reihe nach mit einem zeitlichen Versatz zwischen jedem Paar aufeinanderfolgender Luftzellen (22, 22', 22") aufgeblasen werden und somit ihren Aufblaszustand erreichen, wobei der zeitliche Versatz zwischen aufeinanderfolgenden Paaren von Luftzellen, um einen Entlüftungszustand zu erreichen, im Vergleich zum Aufblasen kürzer ist.

9. Pneumatische Massagevorrichtung nach Anspruch 8, **dadurch gekennzeichnet, dass** das Feld (20) der Luftzellen (22, 22', 22") eine Hauptleitung (24), die an eine Pumpe anschließbar ist, um Druckluft zu erhalten, und eine entlang einer Hauptleitung (24) angeordnete Vielzahl von Luftzellen (22, 22', 22") umfasst, wobei jede Luftzelle über eine Verbindung (26) mit der Hauptleitung (24) kommuniziert und einen integrierten Fließwiderstand (52, 80) hat, wobei die Luftzellen (22, 22', 22") und die jeweiligen Fließverbindungen (26) zur Hauptleitung in verschiedenen Abständen entlang der Hauptleitung (24) verteilt sind, wodurch eine oder mehrere Reihen von Luftzellen (22, 22', 22") entlang der Hauptleitung (24) gebildet werden.

10. Pneumatische Massagevorrichtung nach Anspruch 9, **dadurch gekennzeichnet, dass** die Hauptleitung (24) des Feldes sich entlang einer gerade Linie verläuft und dass die Luftzellen (22, 22', 22") mit der Hauptleitung verbunden sind, um eine lineare Reihe von Luftzellen zu bilden.

11. Pneumatische Massagevorrichtung nach einem der Ansprüche 8 bis 10, **dadurch gekennzeichnet, dass** die Fließwiderstände derart dimensioniert sind, dass der zeitliche Versatz zwischen einer Luftzelle, die ihren Aufblaszustand erreicht, und der nächsten nachfolgenden Luftzelle in der Reihe von Luftzellen, die ihren Aufblaszustand erreicht, zwischen 0,5 s und 30 s beträgt.

## Revendications

1. Dispositif de massage pneumatique pour un siège de véhicule comprenant :
un agencement (20) de cellules d'air gonflables distribuées (22, 22', 22") équipées d'une structure de conduit d'air (24, 26) qui est raccordable pour recevoir de l'air pressurisé pour le gonflage et pour purger de l'air de l'agencement de cellules d'air pour le dégonflage, et qui présente pour chaque cellule d'air une connexion de flux (26) pour le flux d'air vers et depuis la cellule d'air ;
un agencement de valve (10) pour la commande du flux dans et hors de l'agencement de cellule d'air par établissement sélectif d'états de gonflage et de dégonflage, dans lequel l'agencement de valve est configuré pour permettre, dans l'état de gonflage, un flux d'air pressurisé à l'agencement de cellule d'air, et pour permettre, dans l'état de dégonflage, à l'air de s'écouler des cellules d'air hors de la structure de conduit pour la purge ; et
une pluralité de résistances de flux (50, 82) agencées dans l'agencement de cellules d'air de sorte que la résistance de flux aux cellules d'air augmente le long de l'agencement de cellule d'air, et de sorte que l'expansion des cellules d'air due au gonflage se propage à travers l'agencement et atteigne au moins une région d'extrémité pneumatique de l'agencement avec un temps de retard ;
**caractérisé en ce qu'**au moins certaines des résistances de flux (52, 80) de l'agencement (20) de cellules d'air sont des résistances de flux asymétriques en termes de direction de flux, **en ce que** cette résistance de flux générée par chaque résistance de flux asymétrique pour la direction de flux pendant le gonflage est supérieure à la résistance de flux générée pour le flux dans la direction inverse pendant le gonflage.

2. Dispositif de massage pneumatique selon la revendication 1, **caractérisé en ce que** les résistances de flux asymétriques (52, 80) sont configurées de sorte que la résistance de flux pendant le flux de gonflage soit au moins deux fois plus grande que la résistance de flux générée pendant le flux de dégonflage.

3. Dispositif de massage pneumatique selon la revendication 2, **caractérisé en ce que** les résistances de flux asymétriques (52, 80) sont configurées de sorte que le rapport entre la résistance de flux pendant le flux de gonflage et la résistance de flux générée pendant le flux de dégonflage soit supérieur à 3, de préférence supérieur à 4.

4. Dispositif de massage pneumatique selon l'une quelconque des revendications précédentes, **caractérisé en ce qu'**une résistance de flux associée à une cellule d'air est intégrée dans la cellule d'air.

5. Dispositif de massage pneumatique selon l'une quelconque des revendications 1 à 3, **caractérisé en ce qu'**une résistance de flux associée à une cellule d'air est située dans la connexion (26) menant à la cellule d'air.

6. Dispositif de massage pneumatique selon la revendication 4, **caractérisé en ce que** les cellules d'air sont des soufflets comprenant une section de concertina d'entrée raccordée à une connexion (26) de la structure de conduit, et au moins une autre section de concertina sur le dessus de la section de concertina d'entrée, et **en ce que** la résistance de flux (52,80) est intégrée dans la cellule d'air associée par incorporation d'une membrane de valve (80) dans la section de concertina d'entrée, laquelle membrane de valve (80) est agencée pour être poussée par flux de gonflage dans la section de concertina d'entrée contre une portion de paroi de section de concertina d'entrée (52) présentant une ouverture (54) fournissant une communication de flux avec l'au moins une autre section de concertina de la cellule d'air, dans lequel la membrane de valve (80) présente des perforations (82) dans la zone tournée vers l'ouverture (54) pour restreindre le flux à travers l'ouverture (54) par les perforations (82), alors que la membrane de valve (80) est agencée pour être levée de la portion de paroi de section de concertina d'entrée (52) par flux d'air de dégonflage à travers l'ouverture (54) dans la section de concertina d'entrée pour permettre ainsi à l'air de s'écouler hors de l'ouverture (54) et dans un espace intermédiaire entre la membrane de valve levée (80) et la portion de paroi de section de concertina d'entrée (52) et vers une arête extérieure de la membrane de valve (80) où une ou plusieurs sections d'arête ouverte (84) permettent à l'air de contourner les perforations (82) de la membrane de valve (80), pour fournir ainsi une restriction de flux asymétrique avec une résistance de flux inférieure pendant le dégonflage par rapport au gonflage.

7. Dispositif de massage pneumatique selon la revendication 5, **caractérisé en ce que** la résistance de flux (52, 80) est incorporée dans une connexion (26) avec une cellule d'air par fourniture en connexion en série avec des portions contigües de la connexion d'un soufflet gonflable raccordé en série présentant au moins une section de concertina, dans lequel une membrane de valve (80) est disposée dans la section de concertina et est agencée pour être poussée par le flux de gonflage dans la section de concertina contre une portion de paroi de section de concertina (52) présentant une ouverture (54) en communication de flux avec une portion contigüe de la connexion, dans lequel la membrane de valve (80) présente des perforations (82) dans la zone tournée vers l'ouverture (54) pour restreindre le flux à travers l'ouverture (54) par les perforations (82) alors que la membrane de valve (80) est agencée pour être levée de la portion de paroi de section de concertina (52) par flux d'air de dégonflage à travers l'ouverture (54) dans la section de concertina pour permettre ainsi à l'air de s'écouler hors de l'ouverture (54) et dans un espace intermédiaire entre la membrane de valve levée (80) et la portion de paroi de section de concertina et vers une arête extérieure de la membrane de valve où une ou plusieurs sections d'arête ouverte (84) permettent à de l'air de contourner les perforations (82) de la membrane de valve (80), pour fournir ainsi une restriction de flux asymétrique avec une résistance de flux inférieure pendant le dégonflage par rapport au gonflage.

8. Dispositif de massage pneumatique selon l'une quelconque des revendications précédentes, **caractérisé en ce que** l'agencement (20) de cellules d'air comprend au moins une série de cellules d'air ultérieures (22, 22', 22"), que les résistances de flux asymétriques sont agencées de sorte que la résistance de flux augmente à partir d'une première cellule d'air (22) de la série le long de cette série de cellules d'air cellule d'air par cellule d'air à une dernière cellule d'air dans la série de cellules d'air de sorte que les cellules d'air soient gonflées en séquence avec un déport de temps entre chaque paire de cellules d'air ultérieures (22, 22', 22") atteignant leurs états gonflés, alors que le déport de temps entre des paires ultérieures de cellules d'air pour atteindre un état dégonflé est plus court par rapport au gonflage.

9. Dispositif de massage pneumatique selon la revendication 8, **caractérisé en ce que** l'agencement (20) de cellules d'air (22, 22', 22") comprend un conduit principal (24) raccordable à une pompe pour la réception d'air pressurisé, et une pluralité de cellules d'air (22, 22', 22") agencées le long du conduit principal (24), chaque cellule d'air communiquant via une connexion (26) avec le conduit principal (24) et présentant une résistance de flux intégrée (52, 80), dans lequel les cellules d'air (22, 22', 22") et les connexions de flux respectives (26) au conduit principal sont distribuées à différentes distances le long du conduit principal (24), formant ainsi une ou plusieurs séries de cellules d'air (22, 22', 22") le long du conduit principal (24).

10. Dispositif de massage pneumatique selon la revendication 9, **caractérisé en ce que** le conduit principal (24) de l'agencement s'étend le long d'une ligne droite et que des cellules d'air (22, 22', 22") sont raccordées au conduit principal pour former une série linéaire de cellules d'air.

11. Dispositif de massage pneumatique selon l'une quelconque des revendications 8 à 10, **caractérisé en ce que** les résistances de flux sont dimensionnées de sorte que le déport de temps entre une cellule d'air atteignant son état gonflé et la cellule d'air ultérieure suivante dans la série de cellules d'air atteignant son état gonflé soit entre 0,5 s et 30 s.
